(19) Europäisches Patentamt
European Patent Office
Office européen des brevets

(11) Veröffentlichungsnummer: **0 043 928**
**B1**

(12) **EUROPÄISCHE PATENTSCHRIFT**

(45) Veröffentlichungstag der Patentschrift: **08.08.84**

(51) Int. Cl.³: **C 08 G 69/48**

(21) Anmeldenummer: **81104606.9**

(22) Anmeldetag: **15.06.81**

(54) **Leichtfliessende, schlagzähe Polyamide und daraus hergestellte Formkörper.**

(30) Priorität: **26.06.80 DE 3023918**

(43) Veröffentlichungstag der Anmeldung: **20.01.82 Patentblatt 82/3**

(45) Bekanntmachung des Hinweises auf die Patenterteilung: **08.08.84 Patentblatt 84/32**

(84) Benannte Vertragsstaaten: **DE FR GB IT**

(56) Entgegenhaltungen:
**DE - A - 1 793 088**
**DE - A - 2 300 541**

(73) Patentinhaber: **BAYER AG, Konzernverwaltung RP Patentabteilung, D-5090 Leverkusen 1 Bayerwerk (DE)**

(72) Erfinder: **Meyer, Rolf-Volker, Dr., Buchheimer Strasse 23, D-4150 Krefeld (DE)**
Erfinder: **Dhein, Rolf, Dr., Deswatinesstrasse 30, D-4150 Krefeld (DE)**
Erfinder: **Brassat, Bert, Dr., Bethelstrasse 24, D-4150 Krefeld 1 (DE)**
Erfinder: **Hagemann, Hermann, Dr., Kandinsky Strasse 52, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 043 928 B1

BUNDESDRUCKEREI BERLIN

**Beschreibung**

Gegenstand der Erfindung sind leichtfließende, schlagzähe Polyamide, die durch Modifizieren von Polyamiden mit Oxicarbonylisocyanaten gewonnen werden.

Die Schlagzähigkeit von Formkörpern aus Polyamidkunststoffen hängt erheblich vom Wassergehalt der Formkörper ab. In wasserfreiem Zustand, z. B. nach der Herstellung der Formkörper durch Spritzgießen sind besonders die aus leichtfließenden Polyamidspritzgußmassen mit mittlerem Molekulargewicht und hier wiederum die aus hochkristallinen Polyamiden hergestellten Formkörper relativ empfindlich gegen Schlagbeanspruchung.

Höhermolekulare Polyamide, wie sie vorzugsweise für die Extrusionsverarbeitung eingesetzt werden, liefern weniger schlagempfindliche Formkörper, sind jedoch infolge ihrer hohen Schmelzviskosität und der daraus resultierenden schlechteren Fließfähigkeit schwieriger zu verarbeiten.

Darüber hinaus erfordert die Herstellung höherviskoser Polyamide häufig eine teure und aufwendige Festphasennachkondensation.

Es besteht daher ein Bedarf nach thermoplastischen, rasch verarbeitbaren, leichtfließenden Polyamiden, aus denen sich Formkörper herstellen lassen, die im trockenen Zustand eine erhöhte Schlagzähigkeit besitzen. Insbesondere sind solche Polyamide von Interesse, die hohe Zugfestigkeit, hohe Wärmestandfestigkeit, gute Beständigkeit gegen Lösungsmittel und leichte Verarbeitbarkeit kombiniert mit einer hohen Schlagzähigkeit und Flexibilität aufweisen.

Es sind bereits verschiedene Verfahren zur Erhöhung der Zähigkeit und Flexibilität von Polyamiden bekannt; so z. B. das Einmischen von niedermolekularen Weichmachern in Polyamide, das aber aus mehreren Gründen keine zufriedenstellende Lösung des Problems bringt. Der größte Teil der für Kunststoffe geeigneten Weichmacher ist mit Polyamiden nicht genügend verträglich und entmischt sich beim Verarbeiten bzw. neigt zum Ausschwitzen. Verträgliche Weichmacher, die mit Polyamiden echte Lösungen bilden, verschlechtern aber meist die guten mechanischen Eigenschaften der Polyamide. Stark polare Stoffe mit niedrigem Molekulargewicht wie Wasser oder Dimethylformamid bewirken eine Verbesserung der Zähigkeit, können aber erst nach der Herstellung der Formkörper eingearbeitet werden, weil bei der Verarbeitung von entsprechend vorbehandelten Polyamidgranulat wegen der relativ niederen Siedepunkte dieser Zusätze blasenhaltige Formkörper entstehen würden.

Dadurch ist dieses Verfahren im allgemeinen zu zeit- und kostenaufwendig und für die Herstellung dickwandiger Formteile wegen der unregelmäßigen Verteilung der Zusätze im Formteil unbrauchbar.

Es wurde auch schon versucht, zur Erhöhung der Zähigkeit von Polyamiden unter Umgehung der Festphasennachkondensation die Polyamide zu verzweigen oder zu vernetzen.

Prinzipiell sind dazu z. B. mehrfunktionelle Epoxide und besonders mehrfunktionelle Isocyanate geeignet.

Diese Verfahren können in der Tat zu Produkten mit höherer Zähigkeit führen. Da aber die Schmelzviskosität ebenfalls stark zunimmt, wird eine Verarbeitung der Polyamide durch Spritzgießen sehr schwierig.

Überraschenderweise wurde nun gefunden, daß man thermoplastische, schlagzähe und leichtfließende Polyamide erhält, die die genannten Nachteile nicht aufweisen, wenn man Polyamide mit (Poly)oxicarbonylisocyanaten modifiziert. Daraus hergestellte Formkörper zeigen ein deutlich verbessertes Zähigkeitsniveau, das entsprechende nichtmodifizierte Polyamide nur mit einem erheblich höheren Molekulargewicht aufweisen.

Besonders überraschend ist, daß bei der Modifizierung der Polyamide ihre Schmelzviskosität nicht ansteigt; d. h., die gute Verarbeitbarkeit der leichtfließenden niedrig- und mittelviskosen Typen bleibt erhalten.

Gegenstand der Erfindung sind daher leichtfließende, thermoplastische Polyamide, erhalten durch Einarbeiten von mindestens einem Oxicarbonylisocyanat der allgemeinen Formel(I)

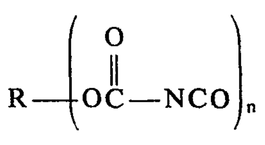

(I)

in der

n eine ganze Zahl von 1—4, vorzugsweise 2 oder 3 und
R einen n-funktionellen organischen Rest bedeuten.

R ist vorzugsweise ein gegebenenfalls substituierter und/oder verzweigter aliphatischer Rest mit $C_1$—$C_{20}$, vorzugsweise $C_3$—$C_{20}$, araliphatischer Rest mit $C_7$—$C_{30}$, vorzugsweise $C_7$—$C_{21}$, oder aromatischer Rest mit $C_6$—$C_{22}$, vorzugsweise $C_6$—$C_{19}$, ein (Poly)ether-, (Poly)-ester-, (Poly) -urethan- oder Polyester(amid)rest, wobei die Polymerisate ein durchschnittliches Molgewicht Mw von 200—8000, vorzugsweise von 300—3000 haben.

Die erfindungsgemäß zur Modifizierung von Polyamiden einzusetzenden (Poly)oxicarbonylisocyanate sind im Prinzip bekannt. Sie können z. B. gemäß DE-AS 1 793 088 durch Umsetzung von Chlorcarbonylisocyanat mit OH-terminierten organischen Verbindungen des Typs R $(OH)_n$, wobei R und n die obengenannte Bedeutung haben, hergestellt werden.

Beispiele für erfindungsgemäß einzusetzende Oxicarbonylisocyanate des Typs $R(OCONCO)_n$ sind Produkte, die vorzugsweise erhalten werden durch Umsetzung von gegebenenfalls verzweigten Dio len wie z. B.

Ethandiol-1,2,
Propandiol-1,3,
Butandiol-1,4,
2,2-Dimethyl-1,3-propandiol,
Hexandiol-1,6,
Octandiole,
1,12-Octadecandiol,
1,4-Bis-hydroxymethyl-cyclohexan,
1,4-Bis-(2-hydroxyethoxy)-benzol,
2,2-Bis-(4-hydroxy-phenyl)-propan,
2,2-Bis-4-(2-hydroxyethoxy)-phenyl-propan,
2,2-Bis-(4-hydroxy-cyclohexyl)-propan,
2, 2-Bis-4-(2-hydroxyethoxy)-cyclohexyl-propan,
1,5-Bis-(2-hydroxyethoxy)-naphthalin

sowie auch mit Triolen wie z. B. Trimethylolpropan mit Chlorcarbonylisocyanat.

Vorzugsweise werden Oxicarbonylisocyanate eingesetzt, bei denen R ein Polyetherrest ist, vorzugsweise einer der allgemeinen Formel (II)

$$-\left(\underset{R'}{\underset{|}{CH}}\right)_m-\left[O\left(\underset{R'}{\underset{|}{CH}}\right)_m\right]_p-O\left(\underset{R'}{\underset{|}{CH}}\right)_m-$$

worin

R' = H oder einen Alkylrest mit $C_1-C_4$, vorzugsweise Methyl,
m = eine ganze Zahl von 2—4 und
p = eine ganze Zahl von 1—200, vorzugsweise 10—50, bedeuten.

Solche zur Umsetzung in Frage kommenden, mindestens zwei, in der Regel zwei bis vier, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Styroloxid oder Epichlorhydrin oder Tetrahydrofuran mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, vorzugsweise wie oben aufgeführt, Ammoniak oder Amine, z. B. Ethylenglykol, Propylenglykol-(1,3) oder -(1,2), Trimethylolpropan, Glycerin, Sorbit, 4,4'-Dihydroxy-diphenylpropan, Anilin, Ethanolamin oder Ethylendiamin hergestellt. Auch Sucrosepolyether, wie sie z. B. in den DE-Auslegeschriften 1 176 358 und 1 064 938 beschrieben werden, sowie auf Formit oder Formose gestartete Polyester (DE-Offenlegungsschriften 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Besonders bevorzugt sind Polyether, die ein Molekulargewicht von 200—6000, vorzugsweise 400—2000 aufweisen und das Umsetzungsprodukt von den obengenannten Polyolen mit Ethylenoxid, Propylenoxid und/oder Butylenoxid sind.

Besonders bevorzugt werden Oxicarbonylisocyanate eingesetzt, bei denen n = 2 ist und R ein Polyetherrest von einem Mol der genannten aliphatischen Diole mit Polyethylenoxid und/oder Polypropylenoxid ist und ein Molgewicht von 400—2000 hat.

Selbstverständlich können auch Gemische der genannten Oxicarbonylisocyanate verwendet werden; ebenso können Polyisocyanate des Typs $R-(NCO)_n$ mitverwendet werden, soweit die Fließfähigkeit der modifizierten Polyamide dies zuläßt.

Der Modifikator wird in Mengen von 0,5—15, vorzugsweise 2—8 Gew.-%, bezogen auf die Gesamtmasse, eingesetzt.

Als Polyamide im Sinne der Erfindung können lineare Polykondensate von Lactamen mit 6—12 Kohlenstoffatomen bzw. übliche Polykondensate aus Diaminen und Dicarbonsäure, wie 6,6-, 6,7-, 6,8-, 6,9-, 6,10-, 6,12-, 8,8-, 12,12-Polyamid, oder Polykondensate aus aromatischen Dicarbonsäuren wie Isophthalsäure, Terephthalsäure mit Diaminen wie Hexamethylendiamin, Octamethylendiamin, aus

araliphatischen Ausgangsstoffen wie m- oder p-Xylylendiaminen und Adipinsäure, Korksäure, Sebacinsäure, Polykondensate auf Basis von alicyclischen Ausgangsstoffen wie Cyclohexandicarbonsäure, Cyclohexandiessigsäure, Diamino-di-cyclohexylmethanen, Isophorondiamin verwendet werden.

Gleichermaßen können Gemische der genannten Polyamide oder aus den genannten Monomeren erhältliche Copolyamide Verwendung finden.

Vorzugsweise werden teilkristalline Polyamide verwendet.

Die rel. Viskosität der einzusetzenden Polyamide sollte mindestens 1,8 (gemessen in 1%iger Lösung in m-Kresol bei 25° C) betragen.

Besonders bevorzugt werden die üblicherweise für technische Spritzgußartikel eingesetzten 6-, 6,6-, 6,9-, 6,10-, 6,12-, 11- und 12-Polyamide verwendet sowie Copolyamide, die zum überwiegenden Anteil aus den Monomeren der obengenannten Polyamide aufgebaut sind und deren rel. Viskosität, gemessen wie oben angegeben, im Bereich von 2,5—4,0 liegt.

Zur Herstellung der erfindungsgemäßen modifizierten Polyamide werden die Polyamidkomponente und die (Poly)oxicarbonyl-isocyanatkomponente, vorzugsweise oberhalb des Schmelzpunktes des Polyamids miteinander vermischt. Dies kann unmittelbar nach der Herstellung des Polyamids durch Vermischen der (Poly) oxicarbonylisocyanate mit der als Strang abzuspinnenden Schmelze erfolgen.

Vorzugsweise werden die erfindungsgemäß modifizierten Polyamide durch Mischen der Ausgangskomponenten in üblichen Schneckenmaschinen hergestellt.

Dabei eignen sich sowohl Maschinen mit einfachen als auch solche mit Doppelschnecken. Doppelschneckenextruder werden bevorzugt eingesetzt, obgleich auch jede andere Mischvorrichtung verwendet werden kann, die zum Plastifizieren von Kunststoffen geeignet ist.

In die erfindungsgemäßen schnellfließenden Polyamide können für den Einsatz als thermoplastische Formmassen zusätzlich auch Stabilisatoren, Entformungsmittel, Gleitmittel, Kristallisationsbeschleuniger, Weichmacher, Pigmente, Farbstoffe, Versteifungs- und/oder Füllstoffe, wie Glasfasern oder Asbest, eingearbeitet werden, wobei vorzugsweise die Einarbeitung dieser Zusätze gleichzeitig mit der Einarbeitung des Modifikators erfolgt.

Die erfindungsgemäß modifizierten Polyamide sind besonders leichtfließende Produkte, die sich in handelsüblichen Spritzgußmaschinen problemlos zu Formkörpern verarbeiten lassen, die eine gegenüber unmodifizierten Vergleichsprodukten deutlich verbesserte Kerbschlagzähigkeit aufweisen unter Beibehaltung der sonstigen polyamidtypischen guten Gebrauchseigenschaften.

Formkörper aus den erfindungsgemäßen Produkten lassen sich auch ohne zusätzliche Additive besser entformen als unmodifizierte Vergleichsprodukte und zeichnen sich durch eine sehr gute Oberflächenbeschaffenheit aus.

## Beispiel 1

98 Gew.-Teile eines 6-Polyamids mit einer rel. Viskosität von 3,0, gemessen in 1%iger Lösung in m-Kresol bei 25° C, einer nach DIN 53 453 bestimmten Kerbschlagzähigkeit von 2,1 kJ/m² und einer Fließlänge*) von 52 cm und 2 Gew.-Teile eines aus Chlorcarbonylisocyanat und einem Polypropylenoxid-polyether mit einem mittleren Molgewicht von 2000 (»Desmophen 3600® der Bayer AG) hergestellten Bis-(oxicarbonylisocyanat) (fahlgelbes, mittelviskoses Öl mit einem NCO-Gehalt von ~4%) werden getrennt mittels einer Dosierwaage bzw. einer Dosierpumpe in einen Zweiwellenextruder vom Typ ZSK 53 gefördert und bei 260° C und 90 U/Min. extrudiert, die homogene Schmelze als Stränge in ein Wasserbad abgesponnen, granuliert und dann bei 80° C im Vakuum bis zu einem Wassergehalt von < 0,05 Gew.-% getrocknet.

Das Produkt hat eine rel. Viskosität von 3,1, eine Kerbschlagzähigkeit von 5,4 kJ/m² und eine Fließlänge*) von 53 cm; d. h. trotz des vergleichbaren Molgewichts und der deutlich erhöhten Kerbschlagzähigkeit hat sich die Fließfähigkeit als Maß für die Verarbeitbarkeit praktisch nicht geändert.

Ein in herkömmlicher Weise durch direkte Kondensation oder durch Festphasennachkondensation hergestelltes 6-Polyamid mit vergleichbarer Kerbschlagzähigkeit hat eine Fließlänge von nur 30 cm.

---

*) Die Fließlänge ist ein Maß für die Fließfähigkeit eines Produktes und damit für seine Verarbeitbarkeit; höhere Fließflänge bedeutet bessere Fließfähigkeit und damit kürzere Spritzcyclen.
Die Fließlänge wurde wie folgt bestimmt: In ein spezielles Werkzeug, das auf 90° gehalten wird, wird mittels einer Spritzgießmaschine, deren Zylindertemperatur 260°C beträgt, die zu untersuchende Probe mit einem Spritzdruck von 72 bar eingespritzt. Besonders leichtfließende Werkstoffe sind in der Lage, unter diesen Bedingungen das Werkzeug zu füllen, so daß man nachher eine 100 cm lange Spirale entnehmen kann. Weniger fließfähige Werkstoffe füllen unter den beschriebenen Bedingungen das Werkzeug nur teilweise; dann können infolge der vorzeitigen Erstarrung der Schmelze nur Spiralkörper von < 100 cm Länge erhalten werden.
Als Fließlänge wird die Länge in cm angegeben, die 5mal reproduziert wurde.

## Beispiele 2—8

Die in Beispiel 1 beschriebene Versuchsdurchführung wird wiederholt, wobei das Polyamid bezüglich seiner relativen Viskosität und seines chemischen Aufbaus variiert wird.

Die Zusammensetzung der Produkte sowie das festgestellte Eigenschaftsbild sind in Tabelle 1 zusammengefaßt.

6,6-Polyamid wurde bei 275° C extrudiert (Beispiel 4).

## Beispiele 9—11

Wie in Beispiel 1 beschrieben, wird 6-Polyamid mit einer relativen Viskosität von 2,9 mit verschiedenen (Poly)oxicarbonylisocyanaten extrudiert und verarbeitet.

Die gemessenen Eigenschaften der modifizierten Polyamide sind in Tabelle 2 zusammengefaßt.

Tabelle 1

| Beispiel | Typ | Eingesetztes Polyamid $\eta_{rel}$ | Gew.-Teile | $a_k$*) (kJ/m²) | Fließlänge (cm) | Additiv wie in Bsp.1 (Gew.-Tle) | Produkteigenschaften $\eta_{rel}$ | $a_k$ (kJ/m²) | Fließlänge (cm) |
|---|---|---|---|---|---|---|---|---|---|
| 2 | 6-PA | 2,9 | 95 | 2,1 | 50 | 5 | 2,8 | 8,7 | 77 |
| 3 | 6-PA | 2,4 | 97 | 1,4 | 80 | 3 | 2,4 | 3,9 | 100 |
| 4 | 6,6-PA | 3,0 | 97 | 2,5 | 65 | 3 | 3,0 | 5,2 | 67 |
| 5 | 6,9-PA | 3,5 | 97 | 3,9 | 45 | 3 | 3,8 | 7,6 | 50 |
| 6 | PA aus Hexamethylendiamin/Isophthalsäure | 2,4 | 98 | 2,8 | 28 | 2 | 2,4 | 4,3 | 30 |
| 7 | Copolyamid aus<br>90 Gew.-% $\varepsilon$-Caprolactam und<br>10 Gew.-% Hexamethylendiamin/Azelainsäure | 3,2 | 97 | 3,5 | 62 | 3 | 3,2 | 9,4 | 66 |
| 8 | Copolyamid aus<br>94 Gew.-% $\varepsilon$-Caprolactam und<br>6 Gew.-% Isophthalsäure/Isophorondiamin | 3,6 | 97 | 3,0 | 35 | 3 | 3,5 | 9,0 | 38 |

*) $a_k$ = Kerbschlagzähigkeit (bestimmt nach DIN 53 453).

Tabelle 2

Modifizierung von 6-Polyamid ($\eta_{rel}=2{,}9$, Fließlänge = 52 cm) mit verschiedenen Bisoxicarbonylisocyanaten (Summe der Gew.-Tle = 100)

| Beispiel | Additiv Art*) | Menge (Gew.-Tle) | Produkteigenschaften $\eta_{rel}$ | Kerbschlagzähigkeit $a_k$ (kJ/$m^2$) | Fließlänge (cm) |
|---|---|---|---|---|---|
| 9 | I | 2 | 3,2 | 5,3 | 49 |
| 10 | II | 2 | 2,8 | 3,7 | 68 |
| 11 | III | 4 | 3,4 | 6,7 | 47 |
| Vergleichsversuch: A | IV | 2 | 4,6 | 4,3 | 22 |
| Vergleichsversuch: B | V | 1 | 4,4 | 3,9 | 27 |

*) I: Bisoxicarbonylisocyanat aus Polyethylenglykol mit einem Molgewicht von ca. 1500; fast farbloses Wachs, Erweichungsbereich ca. 45° C; NCO-Gehalt: 4,9%.
II: Bisoxicarbonylisocyanat aus 1,12-Octadecandiol, farbloses Öl, NCO-Gehalt: 19%.
III: Mischung aus 3 Gew.-Teilen des Additives wie in Beispiel 1 und 1 Gew.-Teil der Allophanat-modifizierten Polyisocyanats IV.
IV: Allophanat-modifiziertes Polyisocyanat auf Basis von Hexamethylendiisocyanat und n-Butanol, fast farblose, mittelviskose Flüssigkeit, NCO-Gehalt: 17,3%.
V: Diphenylmethandiisocyanat mit ca. 35% mehrfunktionellen Mehrkernanteilen.

**Patentansprüche**

1. Thermoplastische, leicht fließende Polyamide, modifiziert durch Einarbeiten von 0,5—15 Gew.-%, bezogen auf die Gesamtmasse, (Poly)oxicarbonylisocyanaten der allgemeinen Formel(I)

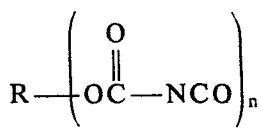

(I)

in der

n für eine ganze Zahl von 1—4 und
R für einen n-wertigen organischen Rest stehen,

und gegebenenfalls üblichen Hilfs- und Zuschlagstoffen.

2. Polyamide nach Anspruch 1, dadurch gekennzeichnet, daß in der allgemeinen Formel (I) R einen gegebenenfalls substituierten und/oder verzweigten aliphatischen Rest mit $C_1$—$C_{20}$, araliphatischen Rest mit $C_7$—$C_{30}$ oder aromatischen Rest mit $C_6$—$C_{22}$, einen (Poly)ether-, (Poly)-ester-, (Poly)-urethan- oder Polyester(amid)rest, wobei die Polymerreste ein durchschnittliches Molgewicht Mw von 200—8000 haben, bedeutet.

3. Polyamide nach den Ansprüchen 1 und 2, dadurch gekennzeichnet, daß R in der allgemeinen Formel (I) für einen Rest der allgemeinen Formel (II)

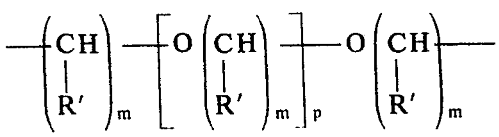

(II)

steht, in der

R' = H oder einen Alkylrest mit $C_1$—$C_4$,
m = eine ganze Zahl von 2—4 und
p = eine ganze Zahl von 1—200 bedeuten.

4. Polyamide nach Anspruch 3, dadurch gekennzeichnet, daß

R′ für einen Methylrest und
p für eine ganze Zahl von 10—50 stehen.

5. Polyamide nach Anspruch 4, dadurch gekennzeichnet, daß die (Poly)oxicarbonylisocyanate in Mengen von 2—8 Gew.-% eingearbeitet werden.

6. Verwendung der Polyamide nach Ansprüchen 1—5, zur Herstellung von Formkörpern.

7. Formkörper aus Polyamiden nach Ansprüchen 1—5.

## Claims

1. Thermoplastic, easy-flowing polyamides, modified by incorporating 0.5—15% by weight, based on the total composition, of (poly)oxycarbonyl isocyanates of the general formula (I)

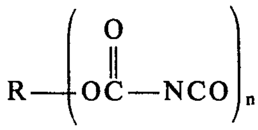
(I)

in which

n represents an integer of 1—4 and
R represents an n-valent organic radical,

and, optionally, customary auxiliairies and additives.

2. Polyamides according to claim 1, characterized in that in the general formula (I) R denotes an optionally substituted and/or branched aliphatic radical with $C_1$—$C_{20}$, araliphatic radical with $C_7$—$C_{30}$ or aromatic radical with $C_6$—$C_{22}$, a (poly)ether, (poly)ester, (poly)urethane or polyester(amide) radical, the polymer radicals having an average molecular weight Mw of 200—8000.

3. Polyamides according to claims 1 and 2, characterized in that R in the general formula (I) represents a radical of the general formula (II)

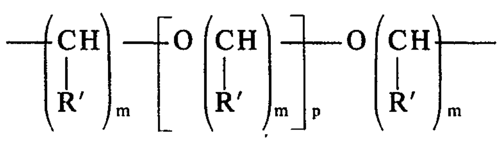
(II)

in which

R′ denotes H or an alkyl radical with $C_1$—$C_4$,
m denotes an integer from 2—4 and
p denotes an integer from 1—200.

4. Polyamides according to claim 3, characterized in that

R′ represents a methyl radical and
p represents an integer from 10—50.

5. Polyamides according to claim 4, characterized in that the (poly)oxycarbonyl isocyanates are incorporated in amounts of 2—8% by weight.

6. Use of the polyamides according to claims 1—5, for the production of moulded articles.

7. Moulded articles produced from polyamides according to claims 1—5.

## Revendications

1. Polyamides thermoplastiques à haute fluidité, modifiés par incorporation de 0,5 à 15% en poids, par rapport au mélange total, de (poly)oxycarbonylisocyanates de formule générale (I)

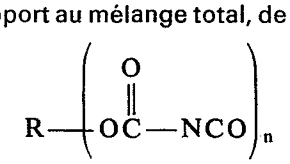
(I)

dans laquelle

n est un nombre entier de 1 à 4 et
R est un reste organique de valence n,

et le cas échéant, d'adjuvants et d'additifs classiques.

2. Polyamides suivant la revendication 1, caractérisés en ce que dans la formule générale (I) R désigne un reste aliphatique éventuellement substitué et/ou ramifié en $C_1$ à $C_{20}$, un reste araliphatique en $C_7$ à $C_{30}$ ou un reste aromatique en $C_6$ à $C_{22}$, un reste (poly)éther-, (poly)ester-, (poly)-uréthanne ou polyester(amide), les restes polymériques ayant un poids moléculaire Mp moyen de 200 à 8000.

3. Polyamides suivant les revendications 1 et 2, caractérisés en ce que R dans la formule générale (I) représente un reste de formule générale (II)

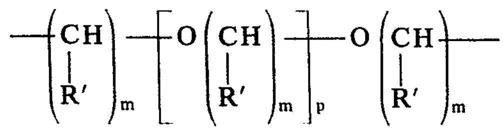

(II)

dans laquelle

R' = H ou un reste alkyle en $C_1$ à $C_4$,
m = nombre entier de 2 à 4 et
p = nombre entier de 1 à 200.

4. Polyamides suivant la revendication 3, caractérisé en ce que

R' est un reste méthyle et
p est un nombre entier de 10 à 50.

5. Polyamides suivant la revendication 4, caractérisés en ce que les (poly)oxycarbonylisocyanates sont incorporés en quantités de 2 à 8% en poids.

6. Utilisation des polyamides suivant les revendications 1—5 pour la production de pièces moulées.

7. Pièces moulées en polyamides suivant les revendications 1 à 5.